# EUROPÄISCHE PATENTANMELDUNG

(11) **EP 0 959 259 A2**
(43) Veröffentlichungstag der Anmeldung: **24.11.1999**
(21) Anmeldenummer: 99109957.3
(22) Anmeldetag: 20.05.1999
(51) Int. Cl.: F16D 65/092

(54) **Scheibenbremse für ein Landfahrzeug**

(30) Priorität: 22.05.1998 DE 19823016
(71) Anmelder: WABCO Perrot Bremsen GmbH, 68229 Mannheim (DE)
(72) Erfinder: Antony, Paul, Dipl.-Ing., 67550 Worms (DE); Jäger, Helmut, Dipl.-Ing., 67067 Ludwigshafen (DE); Macke, Wlodzimierz. Dipl.-Ing., 68542 Heddesheim (DE)
(74) Vertreter: Patentanwälte Leinweber & Zimmermann

(57) **Zusammenfassung**

Die Erfindung betrifft eine Scheibenbremse für ein Landfahrzeug, mit einer Bremsscheibe, mindestens einem Bremsbelag, der bei Betätigung der Bremse in einer vorbestimmten Richtung gegen die Bremsscheibe gedrückt wird, und mindestens einem Belagträger, der den Bremsbelag unmittelbar trägt und die beim Bremsen an dem Bremsbelag auftretenden Reibkräfte aufnimmt.

Erfindungsgemäß ist der Bremsbelag bezüglich des Belagträgers in der vorbestimmten Richtung verschieblich.

## Beschreibung

Die Erfindung betrifft eine Scheibenbremse für ein Landfahrzeuq, mit einer Bremsscheibe, mindestens einem Bremsbelag, der bei Betätigung der Bremse in einer vorbestimmten Richtung gegen die Bremsscheibe gedrückt wird, und mindestens einem Belagträger, der den Bremsbelag unmittelbar trägt und die beim Bremsen an dem Bremsbelag auftretenden Reibkräfte aufnimmt.

Scheibenbremsen der eingangs genannten Art sind bekannt, beispielsweise aus der DE 39 06 450 A1. Dabei wird als Belagträger im Sinne der Erfindung nur die in der DE 39 06 450 A1 gezeigte Trägerplatte 1 angesehen, nicht aber etwaige Führungsbolzen im Bremssattel, an denen die Trägerplatte mittels Schlitzen 13 aufgehängt ist. Diese Führungsbolzen dienen nämlich zwar auch dem Tragen des Bremsbelags, tragen ihn aber nicht "unmittelbar", wie das bei der Trägerplatte 1 der Fall ist.

Nach der DE 39 06 450 A1 bilden der Bremsbelag und der Belagträger zusammen die sogenannte Bremsbacke. Dabei ist der Bremsbelag durch heißes Aufpressen an der Trägerplatte unlösbar befestigt. Mithin kann beim Betätigen der Bremse der Bremsbelag nur gemeinsam mit dem Belagträger gegen die Bremsscheibe gedrückt werden, weshalb der Belagträger auch entsprechend verschieblich an dem Bremsenträger gehalten sein muß.

Die Herstellung der aus dem Stand der Technik bekannten Bremsbacke ist sehr aufwendig. Darüber hinaus muß bei Erreichen der Verschleißgrenze nicht nur der Bremsbelag, sondern auch der Belagträger ausgetauscht werden, was äußerst unwirtschaftlich ist. Schließlich wird bei Bremsen des Standes der Technik immer wieder eine Durchbiegung des Belagträgers beobachtet, die sich wegen dessen fester Verbindung mit dem Bremsbelag auch auf den Bremsbelag auswirkt, so daß keine optimale Anlage an der Bremsscheibe mehr gegeben ist.

Es ist Aufgabe der Erfindung, die Herstellung einer Scheibenbremse zu vereinfachen. Ferner ist Aufgabe der Erfindung, eine Scheibenbremse der eingangs genannten Art derart auszugestalten, daß beim Austausch eines verschlissenen Bremsbelags nicht auch der Belagträger mit ausgetauscht werden muß. Schließlich ist Aufgabe der Erfindung, eine Beeinträchtigung der Anlage des Bremsbelages an der Bremsscheibe beim Bremsen infolge eines Durchbiegens des Belagträgers zu vermeiden.

Erfindungsgemäß wird die gestellte Aufgabe dadurch gelöst, daß bei einer Scheibenbremse der eingangs genannten Art der Bremsbelag zum Bremsen bezüglich des Belagträgers in der vorbestimmten Richtung verschieblich ist.

Mit anderen Worten wird zum Bremsen der Bremsbelag gegen die Bremsscheibe gedrückt, nicht aber der Belagträger. Die Zuspannkraft wirkt dazu zwar auf den Bremsbelag, nicht aber auf den Belagträger.

Da keine dauerhafte Befestigung des Bremsbelages an dem Belagträger erforderlich ist, ist die Herstellung insgesamt vereinfacht. Ferner kann der Bremsbelag bei Erreichen seiner Verschleißgrenze ausgetauscht werden, ohne daß es auch gleichzeitig eines Austauschs des Belagträgers bedürfte. Schließlich wirkt sich wegen der Verschieblichkeit des Bremsbelages bezüglich des Belagträgers eine eventuelle Durchbiegung des Belagträgers nicht auf die Anlage des Bremsbelages an der Bremsscheibe beim Bremsen aus. Abgesehen davon wird wegen der genannten Verschieblichkeit bei einer erfindungsgemäßen Scheibenbremse eine Zuspannkraft immer direkt auf den Bremsbelag und nicht auf den Belagträger wirken, weshalb eine Durchbiegung des Belagträgers schon aus diesem Grunde nicht zu erwarten ist.

Erfindungsgemäß bevorzugt faßt der Belagträger den Bremsbelag in einer parallel zu der Hauptebene der Bremsscheibe liegenden Ebene rahmenartig ein. Dadurch bleibt eine exakte Führung des Bremsbelages durch den Belagträger selbst dann erhalten, wenn Bremsscheibe und Bremsbelag ihre Verschleißgrenzen unterschritten haben. Demgegenüber konnte bei der Scheibenbremse nach dem oben genannten Stand der Technik die Bremsbacke aus ihrer Führung herausfallen, wenn die Verschleißgrenzen unterschritten wurden.

Der Bremsbelag ist erfindungsgemäß weiter bevorzugt in einer Durchgangsöffnung in dem Belagträger angeordnet. Mit anderen Worten ist ein den Bremsbelag vollständig umschließender Rahmen vorgesehen, der eine allseits verläßliche Halterung und Führung des Bremsbelages sicherstellt. Die Durchgangsöffnung erlaubt dabei ein Einsetzen des Bremsbelages von der scheibenabgewandten Seite her.

Dabei kann vorgesehen sein, daß die Durchgangsöffnung eine kreisförmige Innenkontur hat und der Bremsbelag eine im Querschnitt kreisförmige Außenkontur hat. Dadurch wird die Montage/Demontage des Bremsbelages an dem Belagträger besonders einfach.

Der Belagträger ist erfindungsgemäß bevorzugt plattenförmig, woraus ein insgesamt vergleichsweise einfacher Aufbau der Scheibenbremse resultiert.

Um eine besonders sichere Halterung zu gewährleisten, ist es erfindungsgemäß bevorzugt vorgesehen, daß der Belagträger an dem Landfahrzeug in der vorbestimmten Richtung unverschieblich gehalten ist.

Insbesondere kann er lösbar an dem Landfahrzeug befestigt sein. Bei von der Bremse abgenommenem Belagträger ist ein Austauschen des darin eingesetzten Bremsbelages besonders einfach.

Er kann aber auch einstückig mit einem zum Aufnehmen von Bremskräften dienenden Teil an dem Landfahrzeug ausgebildet sein.

Erfindungsgemäß bevorzugt kann eine elastische Kopplungseinrichtung an dem Belagträger für den Bremsbelag vorgesehen sein. Dadurch wird die relative Vor- und Rückwärtsbewegung des Bremsbelages in der vorbestimmten Richtung bezüglich des Belagträgers verbessert.

Erfindungsgemäß befindet sich eine Kopplungseinrichtung in Teilabschnitten der Durchgangsöffnung, die keine Reibkräfte aufnehmen. Somit sind Verquetschungen ausgeschlossen.

Insbesondere zur Vorbeugung gegen Schrägverschleiß kann erfindungsgemäß die vorbestimmte Richtung der Verschieblichkeit des Bremsbelages mit einer Drehachse der Bremsscheibe einen spitzen Winkel bilden.

Der Belagträger kann erfindungsgemäß zum Tragen von zwei oder mehr Bremsbelägen ausgelegt sein. Dadurch kann die Reibfläche vergrößert und damit sehr variabel entsprechend dem jeweiligen Anwendungsfall gestaltet werden. Zwischenräume zwischen benachbarten Bremsbelägen lassen eine wesentlich bessere Luftzirkulation und somit eine verbesserte Kühlfunktion zu, wodurch Schäden am Bremsbelag und/oder an der Bremsscheibe durch Überhitzung infolge von Dauerbremsungen vorgebeugt werden kann.

Bei Gleitsattel-Scheibenbremsen stellt sich noch ein weiteres Problem:

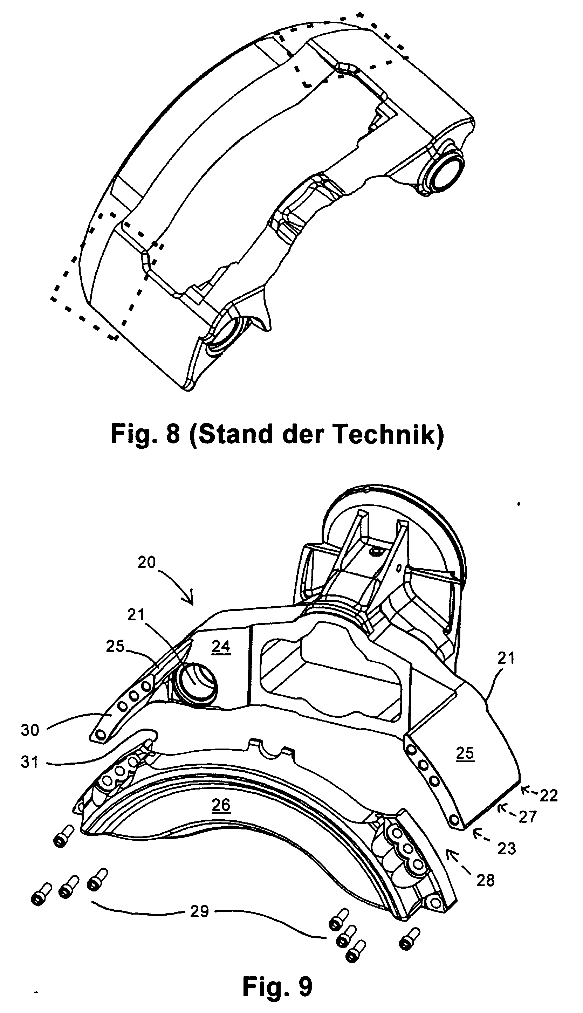

Generell vollziehen Gleitsättel der radial offenen Bauweise, wie sie insbesondere bei Nutzfahrzeugen zum Einsatz gelangen, in Abhängigkeit von der Größe der Bremskraft eine radiale Aufweitung. Diese elastische Radialverformung tritt insbesondere am reaktionsseitigen Sattelschenkel in Form einer Schrägstellung auf, was dazu führt, daß es beim reaktionsseitigen Bremsbelag zu einer nicht gleichmäßigen Belaganpressung gegen die Bremsscheibe kommt. Als Folge davon treten Kantenpressungen, radialer Schrägverschleiß und eine übermäßige Bremsscheibenbelastung auf, die dann zu Wärmerissen an der Bremsscheibe führen können. Dieser kritische und einer Dauerbelastung durch Verformung unterliegende Bereich am Gleitsattel liegt immer im Übergangsbereich von den beiden die Bremsscheibe übergreifenden Brückenbereichen in den radial einwärts verlaufenden reaktionsseitigen Bremssattelschenkel. Zwei solche Bereiche sind in Fig. 8 durch gestrichelte Rahmen markiert.

Um diesen kritischen Bereich gegen Sattelbrüche durch Materialermüdung und/oder durch Kerbwirkungen abzusichern, sind komplizierte Sattelkonturen und dementsprechende Materialstärken notwendig. Dies erfordert demzufolge aufwendige Gießformen zum Abgießen des Bremssattels und einen erhöhten Material- u. Gewichtseinsatz. Daraus resultiert eine Vergrößerung des Einbauvolumens der Bremse im Bereich der Radfelge. Da gerade die Bauraumvergrößerung nicht möglich ist, können diese kritischen Bereiche am Bremssattel nicht vollständig eliminiert werden.

Ein weiterer Nachteil der beschriebenen Ausführung liegt darin, daß ein Wechsel der Bremsscheibe erst dann möglich ist, wenn zuvor die Bolzenführungen des Bremssattels vom Bremsenträger gelöst und dann der die Bremsscheibe übergreifende Gleitsattel komplett entfernt worden ist. Der Ausbau ist dementsprechend umständlich und zeitaufwendig.

Nach diesem Aspekt liegt mithin der Erfindung die Aufgabe zugrunde, einen Gleitsattel für eine Gleitsattel-Scheibenbremse derart auszuführen, daß
a) die Funktionseigenschaften und
b) die Einsatzbedingungen
des Gleitsattels verbessert werden.

Bei einer Scheibenbremse, die im übrigen auch die oben beschriebenen erfindungsgemäßen Merkmale haben kann, wird diese Aufgabe erfindungsgemäß dadurch gelöst, daß die Scheibenbremse einen Gleitsattel aufweist, der sich aus mindestens zwei lösbar miteinander verbundenen Teilen zusammensetzt, wobei zur Verbindung der beiden Teile mindestens ein im Übergangsbereich zwischen einem radial außerhalb der Umfangslinie der Bremsscheibe liegenden Brückenbereich und einem die Bremsscheibe radial überlappenden reaktionsseitigen Bremssattelschenkel angeordnetes Verbindungselement dient, das sich in Axialrichtung der Bremsscheibe erstreckt.

Daher wird nicht mehr wie bisher die Elastizität bei der zuspannbedingten Aufweitung des Gleitsattels durch das Grundmaterial (in der Regel Guß), sondern vielmehr durch die Verbindungselemente vorgegeben. Dadurch ist kein starrer Übergangsbereich mehr vorhanden. Das Material der Verbindungselemente kann dabei so gewählt werden, daß zum einen eine gezielte relative axiale Dehnung möglich wird und daß zum anderen auftretende Spannungen durch die im Vergleich mit dem übrigen Grundmaterial festeren Verbindungselemente sicher aufgenommen werden. Im Ergebnis wird eine schräge Aufweitung vermieden und die übrigen obigen Nachteile werden wegen der gleichmäßigen Belaganlage überwunden.

Bevorzugt weist eines der beiden Teile den die Bremsscheibe radial überlappenden Bremssattelschenkel auf. Durch die Trennung des reaktionsseitigen Bremssattelschenkels von dem Brückenbereich ergibt sich der folgende Vorteil: Werden die Verbindungselemente, die beispielsweise von Schrauben gebildet sein können, von der Reaktionsseite (offene Fahrzeugseite) aus entfernt, kann der Bremssattelschenkel von dem Brückenbereich abgenommen werden, wodurch ein freier Zugang von dieser Seite zur Bremsscheibe geschaffen ist. Mithin kann ohne Demontage der anderen Sattelteile, beispielsweise etwaiger Bolzenführungen, die Bremsscheibe unterhalb des Brückenbereiches zur offenen Fahrzeugseite hin entfernt werden.

Ein weiterer Vorteil ergibt sich dadurch, daß der reaktionsseitige Bremssattelschenkel beispielsweise aus einem Material höherer Festigkeit, wie etwa als Schmiedeteil, gegenüber den übrigen Sattelteilen hergestellt werden kann. Dadurch läßt sich die Satteldimensionierung positiv beeinflussen.

Ferner läßt der als Extrateil ausgeführte Bremssattelschenkel auch eine wesentlich bessere und flexiblere Gestaltung und Bearbeitung der Belaganlagenstruktur zu.

Im folgenden ist die Erfindung anhand bevorzugter Ausführungsbeispiele unter Bezugnahme auf die beiliegende Zeichnung mit weiteren Einzelheiten näher erläutert. Dabei zeigen
Fig. 1 eine perspektivische schematische Ansicht eines Belagträgers mit dem Bremsbelag in nicht eingesetztem Zustand,
Fig. 2 eine geschnittene Seitenansicht eines Bremsbelages in einem Belagträger,
Fig. 3 die Ansicht nach Fig. 1, jedoch mit drei Bremsbelägen,
Fig. 4 eine geschnittene Draufsicht mit drei Bremsbelägen in einem Belagträger,
Fig. 5 eine geschnittene Seitenansicht einer weiteren Ausführungsform in unbetätigtem Zustand,
Fig. 5a die gleiche Ansicht wie Fig. 5, jedoch in betätigtem Zustand,
Fig. 6 eine geschnittene Seitenansicht noch eines weiteren Ausführungsbeispiels in unbetätigtem Zustand,
Fig. 6a die gleiche Ansicht wie Fig. 6, jedoch in betätigtem Zustand,
Fig. 6b eine ausschnittweise Vorderansicht des Ausführungsbeispiels nach Fig. 6 bzw. 6a,
Fig. 7 eine geschnittene Seitenansicht noch eines weiteren Ausführungsbeispiels der Erfindung,
Fig. 8 eine perspektivische Ansicht eines Gleitsattels nach dem Stand der Technik,
Fig. 9 eine perspektivische Ansicht eines zweigeteilten Gleitsattels nach einem Ausführungsbeispiel der Erfindung und

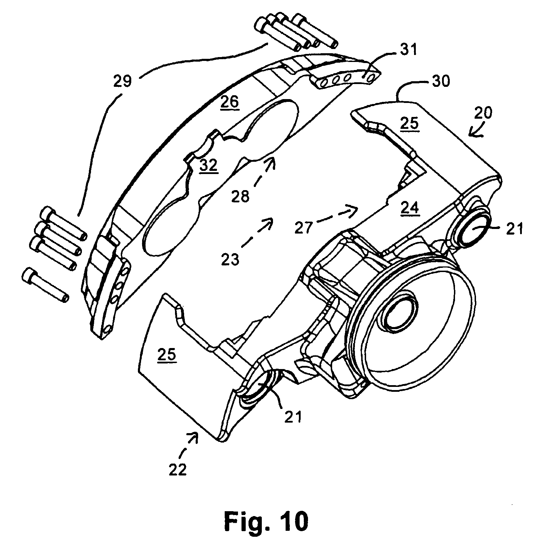

Fig. 10 den gleichen Sattel wie Fig. 11, jedoch in einer anderen Ansicht.

Die Figuren zeigen jeweils Details von Bremsen unter Anwendung der Erfindung. Bei den Bremsen kann es sich um Sattelscheibenbremsen, insbesondere Gleitsattelscheibenbremsen handeln.

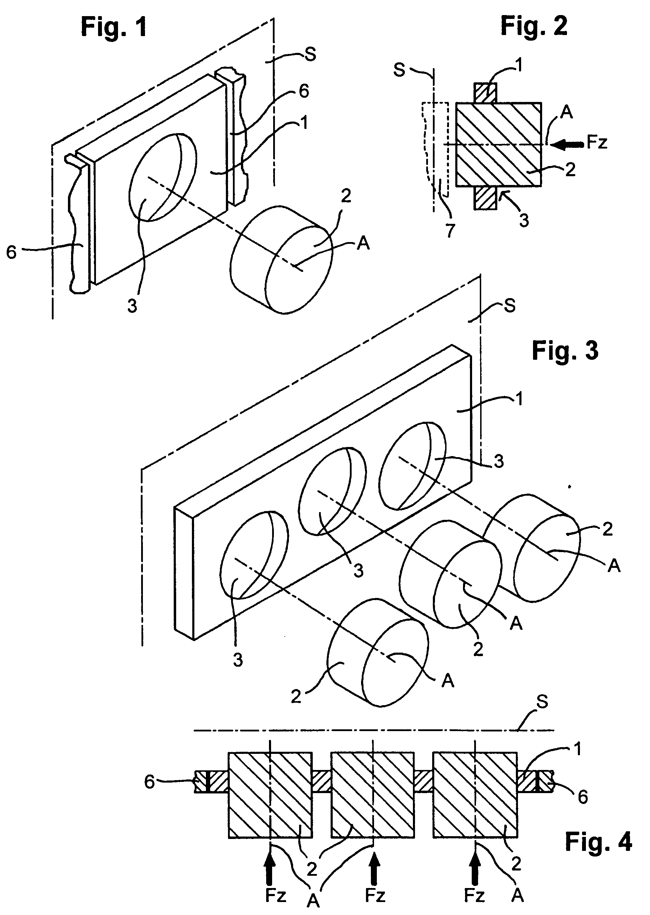

Fig. 1 zeigt einen plattenförmigen, sich parallel zu einer Bremsscheibenmittelebene S erstreckenden Belagträger 1 mit einer Öffnung 3, in die ein Bremsbelag 2 gleicher Kontur derart eingeschoben ist, daß er beidseitig aus dem Belagträger 1 herausragt und gegenüber diesem entlang einer Verschiebeachse A bewegbar ist. Gemäß Fig. 2 wird der Bremsbelag 2 bezüglich des Belagträgers 1 dann verschoben, wenn auf den Bremsbelag 2 eine zuspannkraft Fz einwirkt. Die Zuspannkraft Fz drückt den Bremsbelag 2 gegen eine Bremsscheibe 7.

Die Figuren 3 und 4 zeigen eine Ausführung, bei der mehr als nur ein Bremsbelag 2, nämlich drei Bremsbeläge in Öffnungen 3 eines Belagträgers 1 verschiebbar gehalten sind. Die Figuren zeigen runde Öffnungen und zylinderförmige Bremsbeläge mit kreisförmigem Querschnitt, jedoch sei ausdrücklich darauf hingewiesen, daß neben dieser sich als optimale Form erwiesenen Ausführungen auch andere Formen und Konturen einzeln oder in Kombinationen möglich sind, wenn dies erforderlich sein sollte.

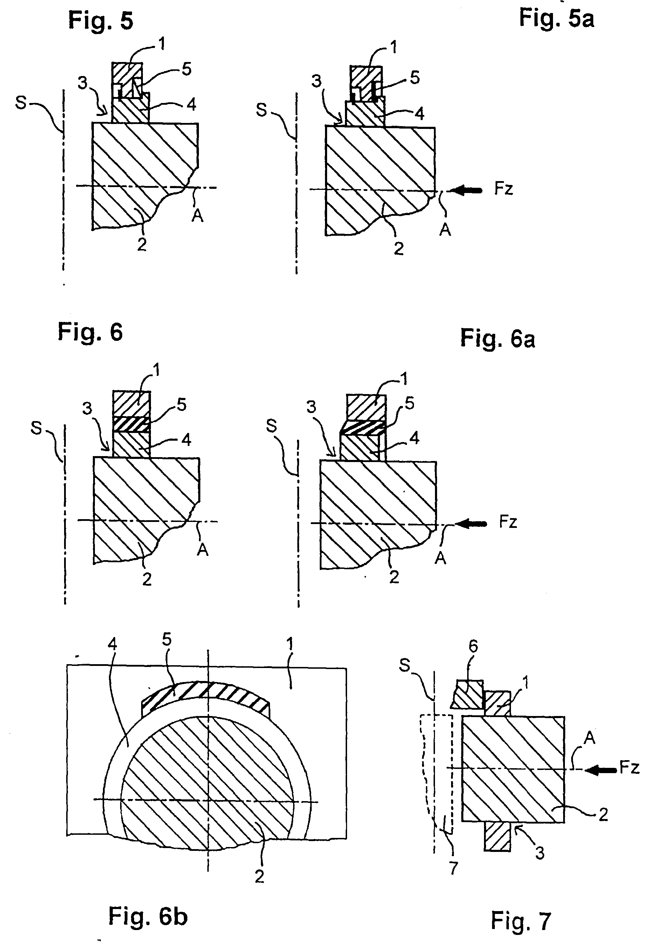

Bei der Ausführung nach der Fig. 5 weist der Bremsbelag 2 ein Führungselement 4 auf. Bei Betätigung der Bremse (Fig. 5a) mit Verschieben des Belages 2 verformt das Führungselement 4 ein elastisches Element 5, das zwischen dem Führungselement 4 und dem Belagträger 1 liegt. Bei dem elastischen Element 5 kann es sich um eine Feder oder um ein Elastomer handeln. Bei Nachlassen der Zuspannkraft Fz (Fig. 5) wird der Bremsbelag 2 durch die elastische Rückstellkraft des elastischen Elementes 5 wieder in seine Ausgangslage zurückgedrückt.

Bei der Ausführung nach Fig. 6, 6a ist, wie Fig. 6b zeigt, das dem Bremsbelagträger 1 zugeordnete elastische Element 5 derart in denjenigen Teilbereichen am Umfang der Öffnung angeordnet, die keine Reibungskräfte aufnehmen, daß es bei Bremsbetätigung (Fig. 6a) nicht komprimiert, sondern nur durch seitliche, d.h. im wesentlichen in axialer Richtung erfolgende Mitnahme verformt wird. Die Gefahr des Zerquetschens des elastischen Elements 5 ist auf diese Weise gebannt. Im übrigen ist aber die Funktionsweise genau wie diejenige nach Fig. 5 bzw. 5a.

Fig. 7 zeigt, daß der Belagträger 1 fest an einem die Bremskräfte aufnehmenden Teil 6 des die Bremse tragenden Fahrzeugs angebracht ist, beispielsweise durch (nicht gezeigte) Schrauben. Die Elemente 1 und 6 können aber auch einstückig miteinander ausgeführt sein. Mit anderen Worten kann gleich das Festteil 6 die Öffnung 3 zur Aufnahme des Bremsbelages 2 aufweisen.

Die Funktion der erfindungsgemäßen Scheibenbremse ergibt sich bereits aus der obigen Beschreibung der Ausführungsbeispiele. Die Montage/Demontage des Bremsbelags 2 bzw. mehrerer Bremsbeläge in den entsprechenden Öffnungen 3 des Belagträgers 1 ist denkbar einfach. Ein simples Einschieben in die Öffnung 3 genügt. Es kann von der scheibenabgewandten Seite her erfolgen. Handelt es sich bei dem Belagträger um ein starres Teil, erfolgt ein Austausch von Bremsbelägen gleich in der Bremse. Wenn es jedoch beispielsweise enge Einbauverhältnisse erforderlich machen, wird der Belagträger 1 von dem Festteil 6 abgenommen, und der Bremsbelag wird außerhalb der Bremse ausgetauscht.

Im folgenden ist das Ausführungsbeispiel nach den Figuren 9 u. 10 erläutert.

In bekannter Weise ist ein Gleitsattel 20 axial verschieblich durch Bolzenführungen 21 auf einem Bremsenträger 22 (nicht gezeigt) gelagert und umgreift eine Bremsscheibe 23 mit seinen beiden Sattelschenkeln. Die Bolzenführungen befinden sich im betätigungsseitigen Sattelschenkel 24, der eine Betätigungseinrichtung aufweist. Von diesem Sattelschenkel erstrecken sich über den Außenumfang der Bremsscheibe zwei Brückenstreben 25, an deren Enden sich ein reaktionsseitiger Sattelschenkel 26 anschließt. Somit liegt ein radial offener Gleitsattel vor, durch dessen Öffnungen beidseitig der Bremsscheibe im Bremsenträger gelagerte Bremsbeläge 27, 28 zugänglich sind.

Zwischen den beiden Brückenstreben 25 und dem reaktionsseitigen Sattelschenkel 26 ist eine Schnittstelle vorhanden, so daß der Bereich nicht mehr wie nach dem Stand der Technik als Einheit starr, sondern zweiteilig ausgeführt ist, und die Teile 25, 26 mittels Verbindungselementen 29 an deren Stirnflächen 30, 31 zusammengehalten werden. Somit wird nicht mehr wie bisher die Elastizität durch das Grundmaterial (Guß), sondern vielmehr durch die die Teile 25, 26 zusammenhaltenden Verbindungselemente 29 vorgegeben. Der starre Übergangsbereich ist nicht mehr vorhanden. Das Material der Verbindungselemente 29 ist so gewählt, daß:
a) eine gezielte, relative axiale Dehnung ermöglicht wird und daß
b) auftretende Spannungen durch die höherfesten Verbindungselemente 29 sicher aufgenommen werden.

Dadurch wird eine schräge Aufweitung vermieden, und es erfolgt mit einer gleichmäßigen Belaganlage eine Beseitigung der oben genannten Nachteile.

Durch die Trennung des reaktionsseitigen Sattelschenkels 26 von den Brückenstreben 25 ergibt sich ein weiterer Vorteil: Werden die Verbindungselemente 29, hier Schrauben, von der Reaktionsseite (offene Fahrzeugseite) aus entfernt, kann der Sattelsohenkel 26 von den Brückenstreben 25 abgenommen werden, wodurch ein freier Zugang von dieser Seite zur Bremsscheibe vorhanden ist. Ohne Demontage der anderen Sattelteile inklusive der Bolzenführungen kann die Bremsscheibe unterhalb der Brückenstreben zur offenen Fahrzeugseite hin entfernt werden.

Im Bereich der beschriebenen Schnittstelle ist auch die Ausbildung von Verbindungsprofilen, z.B. Klauenprofilen usw., zwischen den Teilen 25 u. 26 möglich, wodurch in Verbindung mit den Verbindungselementen 29 ein Formschluß mit einer relativen axialen Dehnung erreicht wird, der aber dennoch durch die Verbindungselemente 29 eine lösbare Verbindung darstellt. Unter Beibehaltung der beschriebenen Vorteile kann dadurch die Anzahl und die Dimensionierung der Verbindungselemente 29 reduziert werden.

Ein weiterer Vorteil ergibt sich dadurch, daß der reaktionsseitige Sattelschenkel 26 aus einem Material höherer Festigkeit, z.B. als Schmiedeteil, gegenüber den übrigen Sattelteilen 24, 25 hergestellt werden kann. Dadurch läßt sich die Satteldimensionierung positiv beeinflussen.

Weiterhin läßt der als Extrateil vorhandene Sattelschenkel 26 auch eine wesentlich bessere und flexiblere Gestaltung und Bearbeitung einer Belaganlagestruktur 32 zu.

Durch den Einsatz des mit den oben genannten Merkmalen gekennzeichneten Gleitsattels läßt sich mit den beschriebenen Vorteilen auch ein Verfahren für den Bremsscheibenwechsel durch folgende Verfahrensschritte kennzeichnen:
1. Radialer Ausbau der Bremsbeläge 27, 28 durch die Öffnung des Gleitsattels,
2. Entfernen der Verbindungselemente 29 von der leicht zugänglichen Fahrzeugseite (hier Reaktionsseite des Gleitsattels) her,
3. Trennung des Sattelschenkels 26 von den Brückenstreben 25 und
4. axialer Ausbau der Bremsscheibe aus dem offenen Gleitsattel.

Der Einsatz dieses Gleitsattels sowie des Verfahrens zur Durchführung eines Scheibenwechsels bietet sich insbesondere bei einer Gleitsattel-Scheibenbremse mit Bremsbelägen ohne Rückenplatte sowie bei einem die Bremsscheibe nicht umgreifenden Bremsenträger der offenen Bauweise an, der ja auch herkömmliche Beläge tragen kann.

Die in der vorstehenden Beschreibung, den Ansprüchen sowie der Zeichnung offenbarten Merkmale der Erfindung können sowohl einzeln als auch in beliebigen Kombinationen für die Verwirklichung der Erfindung in ihren verschiedenen Ausführungsformen wesentlich sein.

## Patentansprüche

1. Scheibenbremse für ein Landfahrzeug, mit
einer Bremsscheibe (7),
mindestens einem Bremsbelag (2), der bei Betätigung der Bremse in einer vorbestimmten Richtung (A) gegen die Bremsscheibe (7) gedrückt wird, und
mindestens einem Belagträger (1), der den Bremsbelag (2) unmittelbar trägt und die beim Bremsen an dem Bremsbelag (2) auftretenden Reibkräfte aufnimmt,
dadurch gekennzeichnet, daß
der Bremsbelag (2) zum Bremsen bezüglich des Belagträgers (1) in der vorbestimmten Richtung (A) verschieblich ist.

2. Scheibenbremse nach Anspruch 1, dadurch gekennzeichnet, daß der Belagträger (1) den Bremsbelag (2) in einer parallel zu der Hauptebene (S) der Bremsscheibe (7) liegenden Ebene rahmenartig einfaßt.

3. Scheibenbremse nach Anspruch 2, dadurch gekennzeichnet, daß der Bremsbelag (2) in einer Durchgangsöffnung (3) in dem Belagträger (1) angeordnet ist.

4. Scheibenbremse nach Anspruch 3, dadurch gekennzeichnet, daß die Durchgangsöffnung (3) eine kreisförmige Innenkontur hat und der Bremsbelag (2) eine im Querschnitt kreisförmige Außenkontur hat.

5. Scheibenbremse nach einem der vorangehenden Ansprüche, dadurch gekennzeichnet, daß der Belagträger (1) plattenförmig ist.

6. Scheibenbremse nach einem der vorangehenden Ansprüche, dadurch gekennzeichnet, daß der Belagträger (1) an dem Landfahrzeug in der vorbestimmten Richtung (A) unverschieblich gehalten ist.

7. Scheibenbremse nach Anspruch 6, dadurch gekennzeichnet, daß der Belagträger (1) lösbar an dem Landfahrzeug befestigt ist.

8. Scheibenbremse nach Anspruch 6, dadurch gekennzeichnet, daß der Belagträger (1) einstückig mit einem zum Aufnehmen von Bremskräften dienenden Teil (6) an dem Landfahrzeug ausgebildet ist.

9. Scheibenbremse nach einem der vorangehenden Ansprüche, gekennzeichnet durch eine elastische Kopplungseinrichtung (5) zwischen dem Belagträger (1) und dem Führungselement (4) für den Bremsbelag (2).

10. Scheibenbremse nach einem der vorangehenden Ansprüche, dadurch gekennzeichnet, daß eine elastische Kopplungseinrichtung bildende elastische Elemente (5) jeweils in den Teilbereichen zwischen Belagträger (1) und Führungselement (4) angeordnet sind, die keine Reibkräfte aufnehmen.

11. Scheibenbremse nach einem der vorangehenden Ansprüche, dadurch gekennzeichnet, daß die vorbestimmte Richtung (A) der Verschieblichkeit des Bremsbelages (2) mit einer Drehachse der Bremsscheibe (7) einen spitzen Winkel bildet.

12. scheibenbremse nach einem der vorangehenden Ansprüche, dadurch gekennzeichnet, daß der Belagträger (1) zum Tragen von zwei oder mehr Bremsbelägen (2) ausgelegt ist.

13. scheibenbremse nach einem der vorangehenden Ansprüche, dadurch gekennzeichnet, daß sie einen Gleitsattel (20) aufweist, der sich aus mindestens zwei lösbar miteinander verbundenen Teilen (25, 26) zusammensetzt, wobei zur Verbindung der beiden Teile (25, 26) mindestens ein im Übergangsbereich zwischen einem radial außerhalb der Umfangslinie (D) der Bremsscheibe (23) liegenden Brückenbereich und einem die Bremsscheibe (23) radial überlappenden reaktionsseitigen Bremssattelschenkel angeordnetes Verbindungselement (29) dient, das sich in Axialrichtung der Bremsscheibe (23) erstreckt.

14. scheibenbremse nach Anspruch 13, dadurch gekennzeichnet, daß eines der beiden Teile (25, 26) den die Bremsscheibe (23) radial überlappenden Bremssattelschenkel aufweist.
